Europäisches Patentamt

European Patent Office

Office européen des brevets

Publication number: **0 298 349**

**A2**

# EUROPEAN PATENT APPLICATION

Application number: 88110317.0

Int. Cl.⁴ **F25D 11/02 , F25D 17/06**

Date of filing: 28.06.88

Priority: 09.07.87 IT 4573287

Date of publication of application:
**11.01.89 Bulletin 89/02**

Designated Contracting States:
**DE ES FR GB IT NL SE**

Applicant: **INDUSTRIE ZANUSSI S.p.A.**
**Via Giardini Cattaneo 3**
**I-33170 Pordenone(IT)**

Inventor: **Marega, Paolo**
**Via Monte Pelmo 6**
**I-33170 Pordenone(IT)**
Inventor: **Pesavento, Luciano**
**Via Dalla Senta 7**
**I-33080 Porcia (Pordenone)(IT)**

Representative: **Patentanwälte Grünecker,**
**Kinkeldey, Stockmair & Partner**
**Maximilianstrasse 58**
**D-8000 München 22(DE)**

Refrigerating appliance for different temperatures with single-compressor refrigerant circuit and single-thermostat temperature control.

A refrigerating appliance for different tempera-
tures, having a single-compressor refrigerant circuit
(9 - 14) and a single thermostatic temperature con-
trol installation (15), and comprising a first and a
second evaporator (9, 10) associated respectively to
a storage compartment (5) and a freezer compart-
ment (6) separate from one another and provided
with separate access doors (7, 8). The appliance is
provided with control means (22) operable to selec-
tively vary the rotational speed of a fan (21) for
correspondingly varying the thermal exchange rate
between the evaporator (9) and the air within the
storage compartment (5), which latter may be of the
variable-volume type.

Fig. 1

# Refrigerating Appliance for Different Temperatures with Single-Compressor Refrigerant Circuit and Single-Thermostat Temperature Control

## Description

The present invention relates to a refrigerating appliance for different temperatures of the type comprising a single-compressor refrigerant circuit and a single-thermostat temperature control installation.

Well known are so-calles two-temperature refrigerating appliances comprising two separate compartments maintained at different temperatures and each accessible by a separate door. Generally one of the compartments is maintained at a nominal temperature of about +5 °C for the storage of fresh foods, while the other compartment is maintained at a r. nal temperature of about -18 °C for the storage of frozen foods.

Appliances of this type may be provided with separate refrigerant circuits for the two compartments, or comprise a unitary refrigerant having a single compressor and respective evaporators connected to the circuit through valves adapted to be controlled in response to different operative conditions.

Solutions of this type are of complicated construction, expensive, and insufficiently reliable.

It is therefore preferred to employ a unitary single-compressor refrigerant circuit, in which the evaporators associated to the storage and freezer compartments are directly connected to the circuit, usually in series, without the employ of deviation and or interception elements.

According to such solutions the temperature control operation determining the cyclic operative and inoperative phases of the compressor is usually carried out by means of a single adjustable thermostatic device adapted to sense the temperature of the evaporator associated to the storage compartment, and possibly of the air contained in this compartment. The compressor may thus for example be deenergized when the temperature of this evaporator, or in the second case of the interior of this compartment, drops below a predetermined minimum value, to be energized again when the evaporator of this compartment is at a temperature exceeding a certain maximum value. During the inoperative phases of the compressor, the evaporator of the storage compartment is automatically defrosted to a substantial degree. In any case, the temperatures within the compartments are a function of the relationship between the operative and inoperative phases of the compressor, and additionally of the general dimensions of the refrigerating appliance, of its state of loading, and of the ambient temperature. In particular, the dimensions of the freezer compartment have to be accurately defined for enabling its interior to be maintained at the desired nominal temperature irrespective of the fact that the temperature is carried out, as already explained, solely in response to the conditions prevailing in the storage compartment. Although this is an optimum solution with regard to structural and functional simplicity, there are a number of shortcomings.

When the refrigerating appliance is installed in an environment of relatively low temperatrues, for example 10 °C, the proportion of the operative phases of the compressor is correspondingly reduced, resulting in an undesirable decrease in the performance of the freezer compartment.

This problem could be overcome by providing the storage compartment with suitable resistance heater element, so-called "compensation heaters" to thereby increase the proportion of the operative phases of the compressor. This solution is obviously complicated, costly and scarcely acceptable from the viewpoint of energy consumption; in the case, on the other hand, of relatively high ambient temperatures, the temperature of the freezer compartment could become excessively low. It is otherwise unthinkable as an alternative to excessively increase the dimensions of the freezer compartment evaporator, as this would result in problems regarding energy consumption and a highly complicated construction.

It is also to be kept in mind that it is not sufficient to dimension the appliance so as to obtain the correct temperature relationship between the different compartments in the presence for instance of low ambient temperatrues. It is in fact obvious that a thus designed refrigerating appliance would operate at excessive compartment temperatures when installed in an environment of relatively high ambient temperatures.

It is therefore an object of the invention to provide a refrigerating appliance for different temperatures with a single-compressor refrigerant circuit and unitary temperature control, in which the shortcomings explained above are eliminated in a simple manner.

More specifically, an object of the invention is the provision of a refrigerating appliance of the type defined above, which is capable of optimum performance, without the necessity of complicated auxiliary installations, irrespective of its employ in environments of relatively low or high ambient temperatures.

Another object of the invention is the provision of a refrigerating appliance of the type defined above. capable without the necessity of complicated auxiliary equipment of temporarily and selectively giving a performance different from its nominal performance.

These objects are attained according to the invention in a refrigerating appliance for different temperatures with a single-compressor refrigerant circuit and a unitary thermostatic temperature control installation. comprising at least a first and a second evaporator directly connected to said circuit and associated respectively to a compartment maintained at a food-storage temperature. and a freezer compartment maintained at a lower temperature. said com partments being separate from one another and each provided with a separate access door. According to the invention. this refrigerating appliance is basically characterized in that at least one of said compartments is provided with control means adapted to selectively vary the rate of thermal exchange between the respective evaporator and the air contained within the respective compartment.

The characteristics and advantages of the invention will become more clearly evident from the following description. given by way of example with reference to the accompanying drawings, wherein:

fig. 1 shows a diagrammatic illustration of a preferred embodiment of the invention. and

figs. 2 and 3 show diagrammatic illustrations of modifications of the refrigerating appliance of. fig 1.

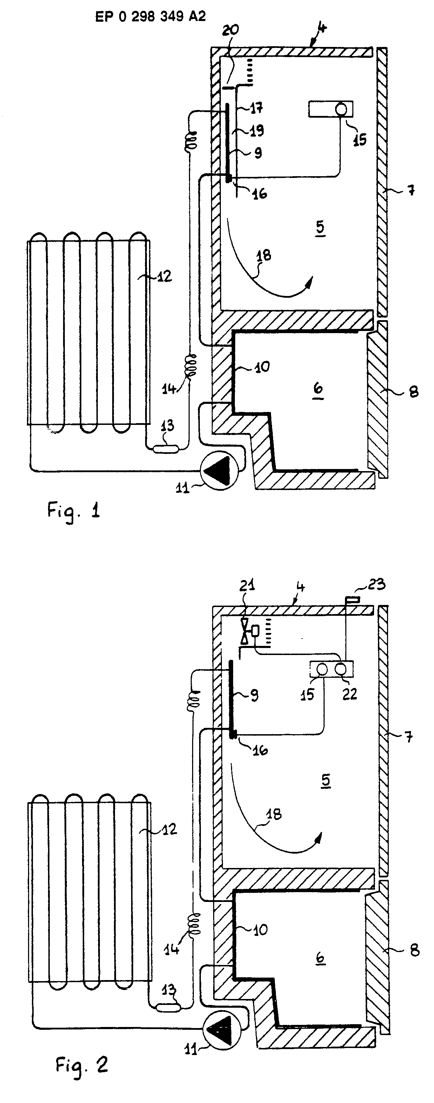

With particular reference to fig. 1. the refrigerating appliance according to the invention comprises an insulated housing 4 formed with two separate compartments 5 and 6 for the storage respectively of fresh foods and frozen foods. Compartments 5 and 6 are provided with separate access doors 7 and 8. respectively. and contain each an associated evaporator 9 and 10. respectively.

If so desired. evaporator 9 may be of the so-called "concealed" type as described for instance in Italian Utility Model Specification no. 201.063.

Evaporators 9 and 10 are connected in series in a refrigerant circuit further including a compressor 11. a condenser 12. a dehydrating filter 13 and a refrigerant flow lamination element 14.

The refrigerating appliance is further provided with a single adjustable thermostatic temperature control device 15 of a per se known type. preferably disposed within storage compartment 5. Control device 15 includes at least one probe 16 adapted to sense the temperature of evaporator 9. and may additionally be provided with a further probe (not shown for the sake of simplicity) adapted to sense the temperature prevailing within the space of storage compartment 5. In response to the nominal temperature selected by the user. control device 15 operates in a known manner to determine the initiation and duration of the operative and inoperative phases of compressor 11.

In response to this control operation. and depending on the general dimensions of the refrigerating appliance ot its loading state and on the temperature of tre environment in which the appliance is installed. compartments 5 and 6 are normally maintained at nominal temperatures of about +5 °C and -18 °C, respectively.

In a similar manner as described in Italian Patent Application no. 48657 A 85. filed on Oct. 11. 1985. storage compartment 5 is provided with a substantially vertical partition 17 adjacent evaporator 9. Partition 17 cooperates with the interior rear wall of compartment 5 to define a passage 19 adapted to promote the natural circulation of the air contained in the compartment. as indicated by arrow 18.

According to the invention. passage 19 is provided with a flap 20 or the like manually operable for instance for varying the cross-sectional area of passage 19 and thus the flow of the circulating air. Flap 20 permits the area of passage 19 to be varied continuously or in discrete steps from a completely closed condition to a completely open state. resulting in corresponding variation cf the rate of thermal exchange between evaporator 9 and the air contained in compartment 5 (and thus the foods stored therein).

As a result. it is possible to dimension the refrigerating appliance as a whole with a view to optimum performance at low ambient temperatures. for instance. and to subsequently vary the said rate of thermal exchange in response to the actual ambient temperature.

In particular. at low ambient temperatures of about 10 °C for instance, flap 20 will be substantially closed to thereby minimize the convective motion of the air about evaporator 9. and thus the thermal exchange rate. With the given performance of the refrigerant circuit 9 to 14. the low ambient temperature is thus compensated by reduced refrigeration of storage compartment 5. while the temperature within freezer compartment 6 is automatically maintained at the selected nominal value.

In the case of high ambient temperatures of for instance 32 °C. on the other hand. flap 20 will be substantially opened to thereby increase the convective motion of the air about evaporatur 9. and thus the thermal exchange rate. With the given performance of the refrigerant circuit 9 to 14. the higher ambient temperature will now be compensated by a higher thermal exchange rate between evaporator 9 and the air contained in compartment 5. Also in this case the temperature within freezer compartment 6 will be automatically maintained at the nominal values to which the appliance has been designed.

By a simple adjustment of flap 20 it is thus possible to adapt the performance of the refrigerating appliance to different ambient temperatures without requiring the operation of the refrigerant circuit 9 to 14 to be modified in any manner: this results in obvious advantages as stated as the object of the invention.

According to a direct mofification of still further simplified construction. partition 17 may be formed by evaporator 9 itself.

In any case. assuming that the refrigerating appliance operates correctly with flap 20 substantially closed. it is possible by opening the flap to execute temporary rapid-cooling phases for specific foods. for instance beverages, placed into storage compartment 5.

The performance of the refrigerating appliance according to the invention may be still further improved by the modification shown in fig. 2. in which partition 17 is omitted. and flap 20 is replaced by a motor-driven fan 21 adapted to create a forced air circulation about evaporator 9.

A manually adjustable control device 22 of a per se known type is operable to selectively vary the rotational speed of fan 21 in a continuous manner or in discrete steps between a minimum value. which may be zero. and a maximum value. The operation of fan 21 is preferably. bot not necessarily. coupled to that of compressor 11. to which purpose control devcie 22 is correspondingly associated to thermostatic control device 15 in a manner per se obvious to one skilled in the art.

The operation of the refrigerating appliance shown in fig.2 substantially corresponds to what has been explained above. it being understood that low and high rotational speeds of fan 21 correspond respectively to the closed and open states of flap 20 in fig. 1. the only difference being an even more efficient thermal exchange between evaporator 9 and the air recirculated by fan 21 when the latter is in operation.

This obviously renders the refrigerating appliance particularly effective. specifically when fan 21 is rotated at a high speed for executing a temporary rapid-cooling phase. During such rapid-cooling phases. the rotational speed of fan 21 is of course preferably higher than the one corresponding to normal operation at elevated ambient temperatures.

The presence in storage compartment 5 of a fan 21 which under certain conditions operates at high rotational speeds is contrary to a technical prejudice. It is in fact believed that a strong circulation of the air within the compartment would lead to an undesirable dehydration of foods contained therein. because the moisture extracted from the foods would be condensed and frozen on the evaporator. This holds certainly true in the case of refrigerating appliances of the so-called "no-frost" type as described for instance in Italian Utility Model Application no. 34056 B 86. filed on Sep. 4. 1986. in the name of the present applicant. according to which the cyclic defrosting of the evaporator occurs occurs at very long intervals (about once every 24 h). and the water set free by the defrosting operation is discharged from the appliance. In contrast thereto. it has been experimentally verified that this phenomenon is nigligible in the refrigerating appliance according to the invention. which is of the type in which the deforsting of evaporator 9 occurs in a per se known manner during each operating cycle of the refrigerant circuit (on the average every hour). During the short operating phases of compressor 11 the dehydration of the foods is thus negligible. In addition. the humidity set free from evaporator 9 during each defrosting operation is recovered by the air within compartment 5.

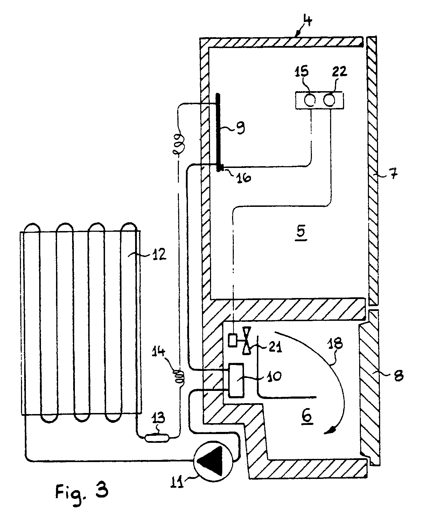

As shown in fig. 3. the present invention is also applicable to a multiple-temperature refrigerating appliance having a single-compressor refrigerant circuit and a single thermostatic temperature control device. in which the freezer compartment 6 is of the "no-frost" type as defined above. In this case freezer evaporator 10 is preferably designed as a ribbed unit and ventilated by fan 21. which is mounted in freezer compartment 6 instead of in storage compartment 5. so that it is not an additional component As in the embodiments described above. thermostatic control device 15 is responsive to the temperature within storage compartment 5

In the embodiment according to fig. 3. the selective variation of the rotational speed of fan 21 by means of control device 22 is analogous to what has been described above. although substantially obverse thereto

The refrigerating appliance 4 may in fact be dimensioned for optimum operation at elevated ambient temperatures of about 32 °C. at which temperature freezer compartment 6 performs well. while fan 21 is rotated at a low speed.

In the case. to the contrary. of low ambient temperatures of about 10 °C. fan 21 is advantageously rotated at a higher speed for compensating the reduced performance of freezer compartment 6 by a higher thermal exchange rate between evaporator 10 and the air contained in the freezer compartment.

Also in this case it is evident that the refrigerating appliance according to the invention is capable of constant optimum performance irrespective of ambient temperatures. withou the necessity of undesirably modifying the operation of the refrigerant circuit 9 to 14.

In this context it is to be noted that the refrigerating appliance according to the invention presents a further important advantage when it is of the type in which the storage compartment 5 is provided with means for selectively varying its volume.

A construction of this type is per se known from Italian Utility Model no. 175,789, and permits part of the useful volume of storage compartment 5 to be used as a so-called "wine cellar compartment" at a somewhat higher temperature of about +10 °C.

The temperature within compartment 5 tends to vary considerably about the nominal value of +5 °C when said means for selectively varying the volume are put into use. It is therefore obvious that in a multiple-temperature refrigerating appliance according to the invention, a corresponding variation of the thermal exchange rate between the evaporator of compartment 5 and the air contained in this compartment permits substantially constant nominal temperatures to be maintained both in freezer compartment 6 and in that part of storage compartment 5 employed for the storage of foods at about +5 °C.

It is understood that the described refrigerating appliance may undergo numerous modifications within the scope of the invention.

The different solutions described may thus by combined with one another in any suitable manner. A variable-speed fan 21 may thus be provided both in storage compartment 5 and freezer compartment 6.

In any case, the means 20 and or 21 for varying the thermal exchange rate between the evaporator and the air contained in the respective compartment can be readily designed for automatic operation by providing the appliance with a probe 23 (fig. 2) adapted to sense the ambient temperature and to correspondingly modify the operation of control device 15 and or 22. The electric or electromechanical components for performing the respective operations are well known to one skilled in the art.

The refrigerating appliance may of course comprise a variable number of compartments and or sub-compartments to be maintained at different temperatures ( for instance for the storage of meat or beverages) formed within compartments 5 and 6.

## Claims

1. A refrigerating appliance for different Temperatures having a single-compressor refrigerant circuit and a single thermostatic temperature control installation, comprising at least a first and a second evaporator directly connected to said refrigerant circuit and associated respectively to a compartment to be maintained at a temperature for the storage of foods and a freezer compartment to be maintained at a lower temperature, said compartments being separate from one another and each provided with a separate access door.
characterized in that at least one of said compartments (5, 6) is provided with control means (20; 21) for selectively varying the thermal exchange rate between the respective evaporator (9, 10) and the air within the respective compartment.

2. A refrigerating appliance according to claim 1, comprising at least one substantially vertical partition cooperating with a wall of at least one of said compartments to form adjacent the respective evaporator a passage for the spontaneous circulation of the air contained in the respective compartment,
characterized in that said control means comprise a flap (20) or the like operable to vary the cross-sectional area of said passage (19).

3. A refrigerating appliance according to claim 2, characterized in that said vertical partition (17) is substantially formed by the respective evaporator (9).

4. A refrigerating appliance according to claim 1, comprising a motor-driven fan operable to create a forced circulation about the evaporator of at least one of said compartments of the air contained in the respective compartment,
characterized in that said control means comprise a device (22) selectively operable for varying the rotational speed of said fan (21).

5. A refrigerating appliance according to claim 1, characterized in that it comprises sensor means (23) responsive to ambient temperature and operable to vary the operation of said control means (20; 21) according ,

Fig. 1

Fig. 2

Fig. 3